# EUROPÄISCHE PATENTSCHRIFT

(11) **EP 1 296 214 B1**
(45) Veröffentlichungstag und Bekanntmachung des Hinweises auf die Patenterteilung: **17.06.2009**
(21) Anmeldenummer: 02018607.8
(22) Anmeldetag: 20.08.2002
(51) Int. Cl.: G06F 21/06

(54) **Verfahren zur Aktivierung einer in einem Gehäuse angeordneten Steuereinheit, die gegen ein Ausspähen von Daten geschützt ist**
Method for activating a control unit mounted in a housing protected against unauthorised data access
Procédé d'activation d'une unité de contrôle monté dans un boîtier protégé contre l'accès non autorisé à des données

(30) Priorität: 30.08.2001 DE 10142537
(43) Veröffentlichungstag der Anmeldung: 26.03.2003
(73) Patentinhaber: adp Gauselmann GmbH, 32339 Espelkamp (DE)
(72) Erfinder: Gauselmann, Paul, 32339 Espelkamp (DE)

(56) Entgegenhaltungen:
- EP-A- 0 849 657
- EP-A- 1 085 396
- WO-A-00/25208
- US-A- 5 844 986
- US-A- 6 141 756

## Beschreibung

Die Erfindung bezieht sich auf ein Verfahren zur Aktivierung einer in einem Gehäuse angeordneten Steuereinheit, die gegen ein Ausspähen von Daten geschützt ist gemäß dem Oberbegriff des Patentanspruches 1.

Aus der technischen Anleitung des Spielgerätes "Triomint Top-Spiel" der Firma NSM ist eine Steuereinheit bekannt, die einen Mikroprozessor mit zugeordnetem Speichermedium in Form von EAROM, EPROM und/oder RAM verfügt. Die Speichermedien- werden mittels einer Prüfsumme abgesichert. Falls diese Sicherung anspricht, werden alle kritischen Daten in dem Speichermedium gelöscht und die Ausgaben des Rechners gesperrt. Des weiteren umfasst die Steuereinheit eine Selbstdiagnose, die beim Einschalten des Spielgerätes aktiviert wird. Bei Inbetriebnahme werden unter anderem die seriellen Ein- und Ausgabestellen überprüft und auch ein Speichertest durchgeführt. Ergab die Überprüfung eine Abweichung von vorherbestimmten Werten, wird das Spielgerät nicht in Betrieb genommen. Von Nachteil ist jedoch dabei, daß die vorgenannte Sicherung auch dann aktiviert wird, wenn ein Defekt im Speicherbaustein vorliegt. Zum anderen wird nicht erfasst, wenn Hilfsprogramme zur Prüfsummenbildung ausgeschaltet werden, und auch nicht, wenn Daten umgestaltet und die Prüfsumme des geänderten Programms mit der vorgegebenen Prüfsumme identisch sind.

In der EP 1 085 396 A1 ist ein PC mit einem Gehäuse gezeigt und beschrieben, an dem an eine Tastatur und ein Monitor in gewohnter Weise anschließbar ist. In dem PC ist ein so genanntes Motherboard mit einen Mikroprozessor, einem RAM-Speicher sowie ein BIOS Bereich vorhanden. Neben den Mikroprozessor ist in dem Motherboard eine weitere Komponente mit einem weiteren Prozessor und einem flüchtigen und nichtflüchtigen Speicher sowie ein Kryptographiespeicher vorhanden. Dadurch ist es möglich, sicherheitsrelevante Bereiche außerhalb der PC-Kernstruktur anzusiedeln.

Der Erfindung liegt die Aufgabe zugrunde, eine Steuereinheit derart auszubilden, dass ein Ausspähen oder eine Veränderung von Daten oder Programmen nicht möglich ist.

Das erfindungsgemäße Verfahren weist den Vorteil auf, dass bei einer Anordnung eines Mikrocomputersystems in einer gegen mechanische und/oder elektrische Angriffe geschützten Baueinheit Daten nur von dem Berechtigten in den Speicher ladbar sind. Für einen Außenstehenden können aufgrund der erfindungsgemäßen Abfolge von aufeinander folgenden zu tätigenden Arbeitsschritten keine anderwertigen oder veränderten Programme in den geschützten Arbeitsspeicher geladen werden. Das Verfahren ist für Außenstehende nicht ermittelbar, da bei einem gewaltsamen Öffnen der geschützten Baueinheit die Daten in den bevorzugt verwandten Halbleiterspeicherelementen gelöscht werden.

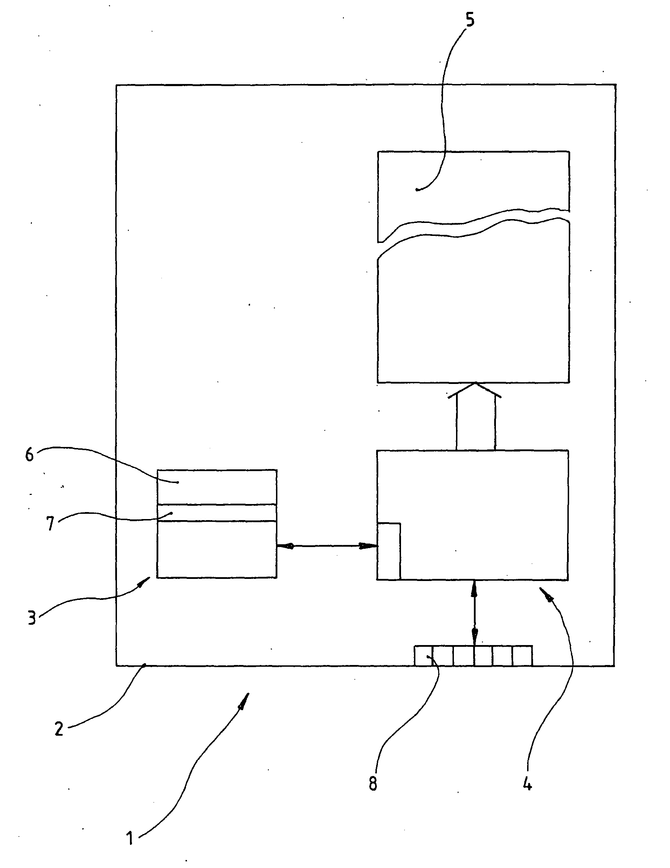

Ein erfindungsgemäßes Ausführungsbeispiel ist in der Zeichnung dargestellt. In einem Blockschaltbild 1 sind die erfindungsgemäßen Elemente eines Sicherheitsmoduls 2 dargestellt. Das nicht näher dargestellte Sicherheitsmodul 2 besteht aus einem allseits geschlossenen zweiteiligen Gehäuse. In dem Gehäuse ist eine Leiterplatte angeordnet, auf der die erforderlichen Bauelemente angeordnet sind, zum Beispiel ein Mikrokontroller 3 mit integrietem Speicher, ein Mikrokontroller 4 und mindestens einem Halbleiterspeicher 5 sowie nicht dargestellte Sensoren zur Erfassung von Umgebungsparametern und eine Löschschaltung. Die Löschschaltung ist mit dem als datenspeichernde Bauteile ausgebildeten Halbleiterspeicher 5 verbunden. Mit den Sensoren wird erfaßt, ob mechanische, optische und/oder chemische Angriffe auf das Gehäuse stattfinden und ob eine Manipulation an der Betriebsspannung und/oder der Umgebungstemperatur erfolgt. Bei außerhalb des vorgegebenen Betriebsbereiches liegenden Ausgangswerten der Sensoren wird von der Sensorik die Löschschaltung aktiviert, die die in dem als datenspeichernde Bauteile augebildeten Halbleiterspeicher 5 befindlichen Daten löscht.

Das Sicherheitsmodul 2 umfaßt den Mikrokontroller 3, zum Beispiel einen AT90S120, als Startrechner. Der Mikrokontroller 3 umfaßt einen Flash-Speicher 6 und einen EEPROM-Speicher 7. Nach einem erfolgten Programmieren des Flash-Speichers 6 des Mikrokontrollers 3 und dem Setzen eines Lock-Bits ist ein nachträgliches Auslesen der Daten im integrierten Speicher 6, 7 des Mikrokontrollers 3 nicht mehr möglich. In dem Speicher 6, 7 des Mikrokontrollers 3 sind alle Routines zum Initialisieren und Starten des als Mikrokontroller 4 ausgebildeten Hauptrechners integriert, so zum Beispiel ein Urladeprogramm und eine Kennziffer für einen Entschlüsselungsalgorithmus. Der Mikrokontroller 3 umfaßt eine eigene nicht dargestellte Lithium-Batterie, mit der auch bei Stromausfall sichergestellt ist, daß die Registerinhalte der Speicher 6, 7 erhalten bleiben. Der Mikrokontroller 3 ist mit dem Mikrokontroller 4 seriell verbunden.

Der Mikrokontroller 4, zum Beispiel ein Motorola MC68331, wird als Hauptrechner verwandt. An dem Mikrokontroller 4 ist zum einen parallel der Halbleiterspeicher 5 angeschlossen und zum anderen seriell eine nach außen führende Schnittstelle 8. An der Schnittstelle 8 ist ein externes Speichermedium anschließbar. Von dem externen Speichermedium wird ein Lade- und ein Anwendungsprogramm heruntergeladen.

Ist die externe Versorgungsspannung am Mikrokontroller 3 angelegt, wird von diesem zunächst eine Checksumme aus einem vorgegebenen Adressraum des batteriegestützten statischen als RAM-Speicher ausgebildeten Halbleiterspeichers 5 errechnet. Wird eine vorgegebene Prüfsumme nicht vorgefunden, wird ein in dem Flash-Speicher 6 des Mikrokontrollers 3 befindliches Urladeprogramm in einen vorgegebenen Adressbereich des als statischer RAM-Speicher ausgebildeten Halbleiterspeicher 5 geladen unter Zuhilfenahme des Debug-Interface (BDM) des Mikrokontrollers 4. Nach erfolgter Übertragung des Urladeprogramms wird geprüft, ob dieses fehlerfrei in den vorgesehenen als RAM-Speicher ausgebildeten Speicherbereich des Halbleiterspeichers 5 übertragen wurde. Erfolgte eine fehlerfreie Übertragung des Urladeprogrammes in den als RAM-Speicher ausgebildeten Halbleiterspeicher 5, wird nachfolgend von dem Mikrokontroller 3 das Urlade-Programm gestartet und nachfolgend von dem Mikrokontroller 4 über die serielle Schnittstelle 8 von einem externen Speichermedium ein Lade-Programm geladen. Das Lade-Programm überprüft den Halbleiterspeicher 5 und lädt nachfolgend von dem externen Speichermedium ein Anwendungsprogramm.

Das Lade-Programm umfaßt auch eine Entschlüsselungssoftware. Während des Herunterladens des verschlüsselten Anwendungsprogramms vom Speichermedium erfolgt eine Entschlüsselung der Applikationssoftware. Vor dem Beginn des Herunterladens der Applikationssoftware wird seitens des Lade-Programmes aus dem Mikrokontroller 3 eine Kennziffer heruntergeladen, die erforderlich ist, damit der Entschlüsselungsalgorithmus die Applikationssoftware entschlüsseln kann. Nach erfolgtem Herunterladen der Applikationssoftware wird von dem Lade-Programm die Applikationssoftware gestartet.

Bei fehlender externer Versorgungsspannung wird der Mikrokontroller 3 von einer Lithiumbatterie mit Spannung versorgt.

Ist die externe Versorgungsspannung angelegt, wird seitens des Mikrokontrollers 3 das Debug-Interface des Mikrokontrollers zur Prüfung des Halbleiterspeichers 5 genutzt. Es wird von einem vorgegebenen Adressraum des Halbleiterspeichers 5 eine Checksumme errechnet. Diese wird mit einer vorgegebenen Checksumme verglichen und bei einer Übereinstimmung wird vom Mikrokontroller 3 ein Systemreset durchgeführt, wodurch der Mikrokontroller 4 mit dem Lade-Programm startet. Das Ladeprogramm führt eine Prüfung des Halbleiterspeichers 5 durch und startet im Anschluß das Anwendungsprogramm.

## Patentansprüche

1. Verfahren zur Aktivierung einer Steuereinheit, die gegen ein Ausspähen von Daten geschützt in einem Gehäuse angeordnet ist,
- wobei die in dem Gehäuse angeordnete Steuereinheit einen als Startrechner ausgebildeten ersten Mikrokontroller (3), einen als Hauptrechner ausgebildeten zweiten Mikrokontroller (4), mindestens einen als Speichermedium ausgebildeten Halbleiterspeicher (5) und eine Schnittstelle (8), an die außerhalb des Gehäuses, ein externes Speichermedium anschließbar ist, umfasst,
- wobei der zweite Mikrokontroller (4) mit dem Halbleiterspeicher (5) über ein BUS-System, sowie mit dem ersten Mikrokontroller (3) und der Schnittstelle (8) jeweils seriell verbunden ist, und der erste Mikrokontroller (3) einen Flash-Speicher (6) und einen EEPROM-Speicher (7) aufweist, wobei
a) von dem ersten Mikrokontroller (3) wird zunächst eine Checksumme aus einem vorgegebenen Adressraum des batteriegestützen staatischen als RAM-Speicher ausgebildeten Halbleiterspeichers (5) errechnet, wird eine vorgegebene Prüfsumme nicht vorgefunden, wird ein in dem Flash-Speicher (6) des Mikrokontrollers (3) befindliches Urladeprogramm in einen vorgegebenen Adressbereich des als statischer RAM-Speicher ausgebildeten Halbleiterspeicher (5) geladen unter Zuhilfenahme des Debug-Interfaces des zweiten Mikrokontrollers (4)
b) von dem ersten Mikrokontroller (3) das Urlade-Programm gestartet wird,
c) von dem zweiten Mikrokontroller (4) über die serielle Schnittstelle (8) von dem externen Speichermedium ein Lade-Programm geladen wird,
d) von dem Lade-Programm der Halbleiterspeicher (5) überprüft wird und von dem Lade-Programm nachfolgend von dem externen Speichermedium ein Anwendugsprogramm geladen wird,
e) von dem ersten Mikrokontroller (3) unter Zuhilfenahme des Debug-Interface des zweiten Mikrokontrollers (4) von einem vorgegebenen Adressraum des Halbleiterspeichers (5) eine Checksumme errechnet wird und diese mit einer vorgegebenen Checksumme verglichen wird und bei einer Übereinstimmung vom dem ersten Mikrokontroller (3) ein Systemreset durchgeführt wird, wodurch der zweite Mikrokontroller (4) mit dem Lade-Programm gestartet wird,
f) von dem Lade-Programm eine Prüfung des Halbleiterspeichers (5) durchgeführt wird und das Anwendungsprogramm gestartet wird.

2. Verfahren nach Anspruch 1, **dadurch gekennzeichnet, dass** in einem Flash-Speicher (6) des zweiten Mikrocontrollers (3) eine Kennziffer abgelegt ist und dass das Lade-Programm in Verbindung mit der Kennziffer vom externen Speichermedium heruntergeladene verschlüsselte Anwendungsprogramme entschlüsselt und im Halbleiterspeicher (5) entschlüsselt ablegt.

## Claims

1. Method for activating a control unit which is arranged in a housing such that it is protected from spying-out of data,
- the control unit arranged in the housing comprising a first microcontroller (3) in the form of a boot computer, a second microcontroller (4) in the form of a main computer, at least one semiconductor memory (5) in the form of a storage medium, and an interface (8) to which an external storage medium can be connected outside the housing,
- the second microcontroller (4) being connected to the semiconductor memory (5) via a bus system and being respectively serially connected to the first microcontroller (3) and to the interface (8), and the first microcontroller (3) having a flash memory (6) and an EEPROM memory (7),
a) the first microcontroller (3) first of all calculating a checksum from a predefined address space of the battery-supported static semiconductor memory (5) in the form of a RAM memory, and a bootstrap program in the flash memory (6) of the microcontroller (3) being loaded into a predefined address area of the semiconductor memory (5) in the form of a static RAM memory with the aid of the debug interface of the second microcontroller (4) if a predefined checksum is not found,
b) the first microcontroller (3) starting the bootstrap program,
c) the second microcontroller (4) loading a loading program from the external storage medium via the serial interface (8),
d) the loading program checking the semiconductor memory (5) and then loading an application program from the external storage medium,
e) the first microcontroller (3) calculating a checksum from a predefined address space of the semiconductor memory (5) with the aid of the debug interface of the second microcontroller (4) and comparing said checksum with a predefined checksum, and the first microcontroller (3) resetting the system if said checksums match, as a result of which the second microcontroller (4) is started with the loading program,
f) the loading program testing the semiconductor memory (5) and starting the application program.

2. Method according to Claim 1, **characterized in that** a code number is stored in a flash memory (6) of the second microcontroller (3), and **in that** the loading program, in conjunction with the code number, decrypts encrypted application programs downloaded from the external storage medium and stores them in the semiconductor memory (5) in decrypted form.

## Revendications

1. Procédé pour l'activation d'une unité de commande, qui est disposée dans un boîtier de façon protégée contre un espionnage de données,
- l'unité de commande disposée dans le boîtier comportant un premier microcontrôleur (3), conçu comme ordinateur de démarrage, un second microcontrôleur (4) conçu comme ordinateur principal, au moins une mémoire à semi-conducteurs (5) conçue comme support de stockage et une interface (8), à laquelle un support de stockage externe peut être raccordé à l'extérieur du boîtier,
- le second microcontrôleur (4) étant relié à chaque fois en série à la mémoire à semi-conducteurs (5) au moyen d'un système de bus, et au premier microcontrôleur (3) et à l'interface (8), et le premier microcontrôleur (3) présentant une mémoire flash (6) et une mémoire EEPROM (7),
a) le premier microcontrôleur (3) calculant d'abord une somme de contrôle à partir d'un espace d'adresse prédéfini de la mémoire à semi-conducteurs (5) à batterie, statique et conçue comme une mémoire RAM, et un programme de chargement initial se trouvant dans la mémoire flash (6) du microcontrôleur (3) étant chargé dans une zone d'adresse prédéfinie de la mémoire à semi-conducteurs (5) conçue comme mémoire RAM statique avec le recours à l'interface de débogage du second microcontrôleur (4) si une somme de contrôle prédéfinie n'est pas trouvée,
b) le premier microcontrôleur (3) démarrant le programme de chargement initial,
c) le second microcontrôleur (4) chargeant un programme de chargement par l'interface (8) série à partir du support de stockage externe,
d) le programme de chargement des mémoires à semi-conducteurs (5) étant vérifié et un programme d'application étant chargé ensuite par le programme de chargement à partir du support de stockage externe,
e) le premier microcontrôleur (3) calculant une somme de contrôle en recourant à l'interface de débogage du second microcontrôleur (4) à partir d'un espace d'adresse prédéfini de la mémoire à semi-conducteurs (5) et cette somme étant comparée avec une somme de contrôle prédéfinie et une réinitialisation du système étant effectuée dans le cas d'une concordance par le premier microcontrôleur (3), de sorte que le second microcontrôleur (4) est démarré avec le programme de chargement,
f) le programme de chargement effectuant un test de la mémoire à semi-conducteurs (5) et le programme d'application étant démarré.

2. Procédé selon la revendication 1, **caractérisé en ce qu'**un code spécifique est déposé dans une mémoire flash (6) du second microcontrôleur (3) et **en ce que** le programme de chargement décode des programmes d'application codés et téléchargés en liaison avec le code numérique à partir du support de stockage externe et les dépose dans une forme décodée dans la mémoire à semi-conducteurs (5).
